(19) Europäisches Patentamt
European Patent Office
Office européen des brevets

(11) **EP 3 524 813 B1**

(12) **EUROPEAN PATENT SPECIFICATION**

(45) Date of publication and mention
of the grant of the patent:
**25.05.2022 Bulletin 2022/21**

(21) Application number: **18863806.8**

(22) Date of filing: **10.04.2018**

(51) International Patent Classification (IPC):
**F03D 80/40** *(2016.01)* **F03D 17/00** *(2016.01)*
**F03D 7/04** *(2006.01)*

(52) Cooperative Patent Classification (CPC):
**F03D 80/40; F03D 7/045; F03D 17/00;** F03D 7/046;
F05B 2260/8211; F05B 2260/84; Y02A 30/00;
Y02E 10/72

(86) International application number:
**PCT/CN2018/082514**

(87) International publication number:
**WO 2019/114160 (20.06.2019 Gazette 2019/25)**

(54) **METHOD AND APPARATUS FOR PREDICTING ICE FORMATION**

VERFAHREN UND VORRICHTUNG ZUR VORHERSAGE VON EISBILDUNG

PROCÉDÉ ET DISPOSITIF DE PRÉDICTION DE FORMATION DE GLACE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2017 CN 201711341540**

(43) Date of publication of application:
**14.08.2019 Bulletin 2019/33**

(73) Proprietor: **Beijing Goldwind Science & Creation
Windpower Equipment Co., Ltd.
Beijing 100176 (CN)**

(72) Inventors:
• **ZHOU, Jie
Beijing 100176 (CN)**
• **AO, Juan
Beijing 100176 (CN)**
• **WANG, Qingtian
Beijing 100176 (CN)**

(74) Representative: **Hoffmann Eitle
Patent- und Rechtsanwälte PartmbB
Arabellastraße 30
81925 München (DE)**

(56) References cited:
EP-A1- 2 592 447 EP-A1- 2 826 993
WO-A1-2019/086287 CN-A- 102 706 389
CN-A- 105 298 761 CN-A- 105 402 093
CN-A- 105 464 912 CN-A- 105 508 152
CN-A- 106 679 719 CN-U- 204 666 839
KR-B1- 101 520 598 US-A1- 2011 089 692
US-A1- 2012 226 485 US-B1- 8 606 418

EP 3 524 813 B1

# Description

## FIELD

The present application relates to the field of wind power generation technologies, and in particular to a method and an apparatus for predicting icing.

## BACKGROUND

Icing on a wind turbine is always a traditional problem in the wind power industry, and is an important factor affecting the income of wind farms. Blades of the wind turbine bear a large ice load when the icing is serious, which may be a great threaten to lifetime of the blades and a safe operation of the wind turbine.

Therefore, how to accurately predict an icing condition of each wind turbine generator system is an urgent technical issue to be addressed.

US 2012/226485 A1 discloses models for predicting ice formation and/or accumulation on wind turbine blades and methods of their use in optimizing performance of wind turbines in the presence of adverse local weather conditions. The predictive models include historical data of local meteorological conditions including inter alia, wind speed, temperature, and relative humidity conditions and are useful, inter alia, for preemptively managing performance of wind turbines operation/shutdown cycles in response to a future predicted blade icing event based on a model of the present invention.

US 8 606 418 B1 discloses a control system including an electronic processor configured to control operation of at least one wind turbine. The control system further comprises at least one weather radar unit positioned proximate to the at least one wind turbine and configured to generate weather data. The electronic processor is configured to control the operation of the at least one wind turbine based on the weather data generated by the at least one weather radar unit.

EP 2 826 993 A1 discloses a wind turbine rotor blade deicing method with a wind turbine rotor blade deicing system arranged on a rotor blade, comprising modular heating elements which cyclically, recurring, discontinuous and/or continuously controlled, at least one modular heating element with a temperature sensor and/or electrical resistance meter, with continuous measurement of environmental measurement values taking place and the wind turbine rotor blade de-icing system being activated when predetermined environmental measurement values are reached.

## SUMMARY

The invention relates to a method according to claim 1, to an apparatus according to claim 6, and to a computer readable storage medium according to claim 7. The mentioned problems are solved by the subject-matter of the independent claims. Further preferred embodiments are defined in the dependent claims.

According to the embodiments of the present application, valid meteorological prediction data features of the target wind turbines at different geographical locations can be precisely extracted based on the geographic information of the target wind turbines. The precise valid meteorological prediction data feature of the target wind turbine is inputted into the icing prediction model, so that precise icing prediction results of the target wind turbines at different geographical locations can be outputted. Therefore, the icing information of the target wind turbine can be predicted with high precision according to embodiments of the present application, so that the operation and maintenance works for preventing icing on the wind turbines can be performed in a good time, thereby avoiding a potential economic loss caused by a passive icing treatment.

## BRIEF DESCRIPTION OF THE DRAWINGS

For a clear illustration of technical solutions of the present disclosure, drawings according to the embodiments are introduced briefly hereinafter.

Figure 1 is a schematic diagram of a method for generating an icing prediction model of a wind turbine generator system according to an embodiment of the present application;

Figure 2 is a schematic diagram of obtaining a historical meteorological prediction data feature according to an embodiment of the present application;

Figure 3 is a schematic diagram of a method for generating an icing prediction model of a wind turbine generator system according to another embodiment of the present application;

Figure 4 is a schematic diagram of an method for predicting icing on wind turbine generator system according to an embodiment of the present application;

Figure 5 is a structure schematic diagram of an apparatus for generating an icing prediction model of a wind turbine generator system according to an embodiment of the present application;

Figure 6 is a structure schematic diagram of an apparatus for predicting icing on a wind turbine generator system according to an embodiment of the present application; and

Figure 7 is a structure schematic diagram of an apparatus for predicting icing on a wind turbine generator system according to an embodiment of the present application.

## DETAILED DESCRIPTION OF EMBODIMENTS

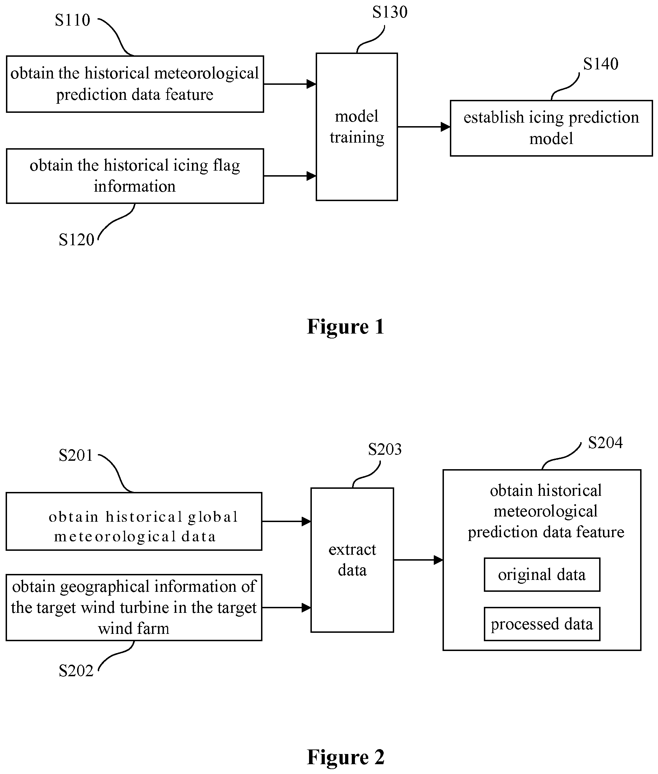

Figure 1 is a schematic diagram of a method for generating an icing prediction model of a wind turbine generator system according to an embodiment of the present application.

As shown in Figure 1, the method for generating the icing prediction model of the wind turbine generator system includes the following steps S110 to S140. In step S110, a historical meteorological prediction data feature is obtained. In step S120, historical icing flag information is obtained. In step S130, model training is performed based on the historical meteorological prediction data feature and the historical icing flag information. In step S140, an icing prediction model is obtained based on the training.

In step S110, the historical meteorological prediction data feature may be extracted from global meteorological data.

In step S120, an obtaining manner of the historical icing flag information of a wind turbine may include the following two manners.

In a first manner, the historical icing flag information is obtained by a hardware feedback from an icing sensor provided with the wind turbine; and

In a second manner, the historical icing flag information is obtained by analyzing operation data of the wind turbine base on an icing mechanism.

For the second manner, the blade shape may be changed by an ice coating according to the icing mechanism. A drag force of the blade increases, a lift force of the blade decreases, thereby the blade enters a stall state. In such case, the generating capacity of the wind turbine decreases, which is directly reflected in an abnormal relationship between a wind speed and a power. A basic formula for determining the abnormal relationship may be Formula 1 shown as follows.

$$P_r < \frac{C_p \rho A V^3}{2} \times \alpha \quad \text{(Formula 1)}$$

In the Formula 1, $P_r$ denotes an actual generated power (kW); $C_p$ denotes a wind power utilization coefficient; $\rho$ denotes an air density, which is 1.23 kg/m$^3$ or estimated by an altitude and an ambient temperature; A denotes a wind swept area calculated by an impeller diameter; V denotes a wind speed; 1/2 is a coefficient; $\alpha$ denotes a threshold ranged from 0 to 1, and a typical value of $\alpha$ may be 0.65. The product of 1/2 and $\alpha$ may be a coefficient threshold ranged from 0 to 1/2. The coefficient threshold may be obtained from a large number of experimental data.

In some embodiments, in a case where (1) the actual generated power is low and meets the Formula 1, (2) situation (1) lasts for a preset time (such as 2 min), (3) the ambient temperature meets an icing condition and (4) there is no other power abnormality warning,, the icing flag of the wind turbine may be set as 1, that is, the state of the wind turbine is an icing state.

In some embodiments, when the formula 1 is used to obtain the icing flag of the wind turbine, the triggering condition for obtaining the icing flag of the wind turbine may be adjusted based on a tolerance of the blade icing or based on other factors.

In some embodiments, the icing flag information may be represented by a Boolean value of 0 or 1. For example, when the icing flag is 1, it indicates that the wind turbine generator system is frozen. When the icing flag is 0, it indicates that the wind turbine generator system is not frozen.

In some embodiments, the icing flag information (abbreviated as a flag or a label) may also be represented by an analog value (For example, in Formula 1, the flag is 0.1 when $\alpha$ is 0.65, the flag is 0.2 when $\alpha$ is 0.60, the flag is 0.3 when $\alpha$ is 0.55, the rest may be deduced in a same manner). The analog value may represent a difference in a thickness of the icing.

In some embodiments, in addition to the above method of comparing the wind speed with the power, a second method of generating the flag may be adopted. The flag is generated based on an abnormal relationship between a wind speed and an impeller speed in a case where the icing causes the blade to be in a stall. Alternatively, multivariate data is inputted into a flag generating model through using a machine learning method, and a training is performed thereon to obtain an icing detection model for outputting the icing flag.

In S130, the model training condition according to an embodiment may include: meteorological prediction data feature and icing flag information of each of wind turbines in a target wind farm for a historical time period are obtained. Model training based on the historical meteorological prediction data feature and the historical icing flag information (called a sample data) may be a supervised learning. Sample data may be divided into a training data set and a test data set. The training data set may include historical meteorological prediction data feature of half the wind turbines in the target wind farm, and a corresponding historical icing flag information of said wind turbines. A decision tree method using an R language may be applied in the model training, details of which may be shown in Formula 2 below.

band_Clas<-rpart (state-.,Train_Ice, method="class",minsplit=8) (Formula 2)

In some embodiments, a regression method may be applied in the model training.

In some embodiments, a feature screening may be performed firstly and then a dimensionality reduction on multiple features may be performed in the model training.

In some embodiments, wind turbines having a higher icing frequency may be selected for the model training, so as to solve a sample imbalance problem of the training.

In some embodiments, random forest or other machine learning algorithms may be used to perform the model training.

In some embodiments, the objective of the model training may be to obtain the icing prediction model based on the feature (such as the historical meteorological prediction data feature) and the flag.

In some embodiments, the Python language, the Matlab language or other modeling language may be applied in the model training. In such case, the expression of the Formula 2 should vary accordingly.

In some embodiments, a model test may be performed based on randomly selected training data set and test data set, or may be performed by a k-fold cross-validation method.

In S140, the icing prediction model can be obtained by the above Formula 2. In this embodiment, the sample for model training may include multiple data sets, such as a data set M composed of original data (which may include original meteorological data feature) and a processed data set N which is obtained by processing a data set M. The processing may include a data deletion processing and a data format unifying processing. Each data set may include one or more data subsets. For example, the data set M may include a subset M', and the data set N may include a subset N', and the like.

In this embodiment, in a case that the sample for the model training is sufficient, the establishing of the icing prediction model may be finished by performing an optimization and based on test data set of the other half wind turbines. The input of the icing prediction model may include a subset M' including an original feature (raw data) of the meteorological data, and a subset N' obtained by performing processing on original variables. Since the training data set and the test data set in this embodiment are taken from the entire wind farm, the icing prediction model can output the icing flag information of each of the wind turbines in the wind farm. Figure 2 is a schematic diagram of obtaining a historical meteorological prediction data feature according to an embodiment of the present application.

As shown in Figure 2, the obtaining a historical meteorological prediction data feature (that is, step S110) may include the following steps S201 to S 204. In S201, historical global meteorological data is obtained. In S202, geographic information of each of wind turbines (wind turbine generator system) in a target wind farm is obtained. In S203, data are extracted from the historical global meteorological data. In S204, the historical meteorological prediction data feature is obtained.

In S201, the historical global meteorological data may be obtained by performing a simulation on weather forecasts of a certain historical time period (e.g., the twelfth lunar month of the last year) for the target wind farm using a weather mode. Specifically, a parameterization scheme, a simulation range and a nesting manner which are suitable for the topographical and climatic features of a region where the wind farm is located may be selected, so as to perform a numerical forecast on the weather condition of the wind farm. To select a suitable parameterization scheme for a region, local weather characteristics should be taken into account for the selection. For example, for the plateaus with complex topography and high altitude which has a relatively strong convection, microphysics and a cumulus convection parameterization process are important for a simulation precision. For a mountain region with variable weather, a planetary boundary layer parameterization scheme is more important. For a water-land junction region such as a coast and a lakeside, a land surface parameterization scheme is more important. In addition, parameterization schemes of microphysics, turbulence, diffusion, long-wave radiation, short-wave radiation, etc. are also important options of parameterization scheme. Since there are hundreds of parameterization options in a meteorological mode, details of which are omitted herein.

For different wind farms, different parameterization schemes may be combined for forecasting. The combined scheme is obtained by summarizing a comparison result between multiple simulations based on local weather features and real measured data. Hereinbefore, the main principles for selecting a parameterization scheme are described. The parameterization scheme may be selected based on the principles and an experience from historical simulating data of the region. The simulation range and the nesting manner are mainly determined by factors such as the size of the wind farm and a required resolution of final data. A final numerical forecast of the target wind farm may include more than one hundred kinds of variables, such as a latitude and a longitude, horizontal and vertical wind speeds, a dry air quality of perturbation, a perturbation pressure, a surface heat flux, a temperature, and a water-gas mixing ratio.

In some embodiments, for a numerical simulation performed based on global meteorological data, the modes used may be commonly used mesoscale numerical modes, such as a Weather Research and Forecasting Mode (WRF), mesoscale non-hydrostatic force mode (Mesoscale Mode version 5, MM5) and a Regional Atmospheric Modeling System (RAMS). In addition, other numerical modes capable of simulating or forecasting, such as various climate modes, ocean modes, ocean-air coupled modes may be used. Alternatively, various prediction models, such as models using a linear regression, multivariate regression, an artificial neural network, a support vectors machine, and a Bayes model may be used to perform a simulation or forecast on the global meteorological data.

In S202, the geographic information may be obtained from wind farm archive information, and the geographic information of the wind turbines may be obtained by any other means such as a satellite image recognition, a drone technology, and a relative position calibration between the wind turbines. The geographical information may be refined to the longitude, latitude and altitude of a position of each of the wind turbines.

In S203, a typical meteorological feature associated with an icing of the target wind farm relates to the topographic and climatic features of the target wind farm. Therefore, the typical meteorological feature associated with icing of the target wind farm is obtained based on the topographic and climatic features of the target wind farm, and the global meteorological data of the wind farm is extracted based on the typical meteorological feature.

The meteorological prediction data (that is, the historical meteorological prediction data feature), which are associated with icing of each of the wind turbines in the target wind farm, are extracted from the historical global meteorological data based on the geographic information including the longitude and latitude. The method for extracting data may be an inverse distance weighting interpolation method, a modified Shepard's method, a bilinear interpolation method, a natural neighbor interpolation method, and a moving average method, and the like.

In S204, the historical meteorological prediction data feature may include original data and processed data. The original data may be original meteorological data feature, and may be specifically defined as a set M, including features M1, M2......Mm. The processed data may be a feature set N, which is obtained by processing the original data, including features N1, N2......Nn.

In some embodiments, the method for obtaining meteorological prediction data feature may be related to the knowledge of a technician on the icing phenomenon, or may be related to objective conditions such as different types of wind turbines, weather conditions, and topographic conditions. Set M, set, and subset M', subset N' for different target wind farms may be inconsistent with each other due to the difference in the above described factors.

In some embodiments, the obtaining historical meteorological prediction data feature of the target wind turbine may include: obtaining a topographic feature and climatic feature of the target wind farm where the target wind turbine is located; obtaining historical global meteorological data of the target wind farm; and extracting the historical meteorological prediction data feature from the historical global meteorological data, based on the topographic feature and the climatic feature.

According to the above embodiments, the icing information of the target wind turbine can be predicted actively and precisely based on the valid topographic prediction data feature, which is obtained, through the simulation training, of the wind turbines at different geographical locations, so that the operation and maintenance works for preventing icing on the wind turbines can be performed in a good time, thereby avoiding a potential economic loss caused by a passive icing treatment.

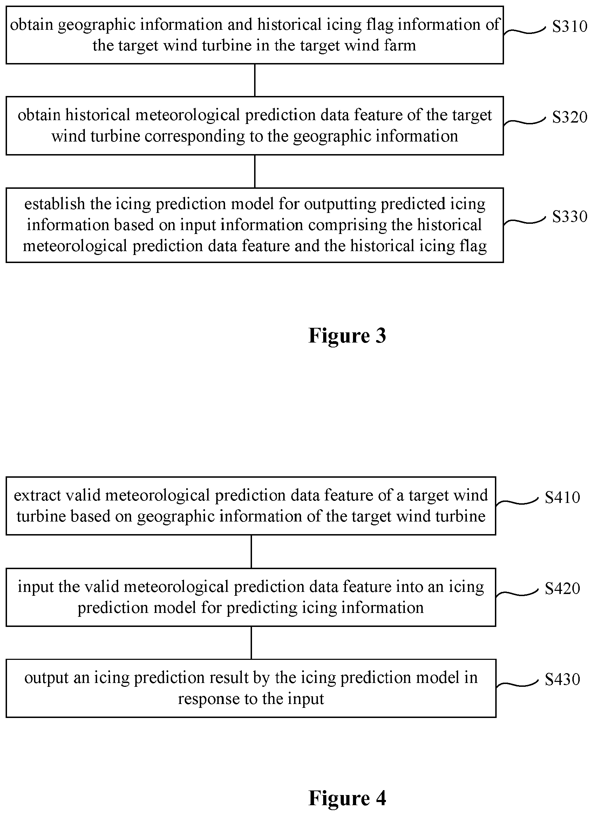

Figure 3 is a schematic diagram of a method for generating an icing prediction model of a wind turbine generator system according to another embodiment of the present application.

As shown in Figure 3, the method for generating the icing prediction model of the wind turbine generator system may include the following steps S310 to S330. In S310, geographic information and historical icing flag information of a target wind turbine in a target wind farm is obtained. In S320, a historical meteorological prediction data feature corresponding to the geographic information of the target wind turbine is obtained. In S330, an icing prediction model for outputting predicted icing information is established based on input information comprising the historical meteorological prediction data feature and the historical icing flag.

In some embodiments, the obtaining the historical meteorological prediction data feature corresponding to the geographic information of the target wind turbine in a preset time period (i.e., step S320) may include: obtaining topographic characteristic data and climate characteristic data of the target wind turbine, based on the geographic information; obtaining the historical global meteorological data of the target wind farm in the preset time period; extracting the historical meteorological prediction data feature from the historical global meteorological data based on the topographic characteristic data and the climate characteristic data.

In S310, the obtaining the historical icing flag information of the target wind turbine in the target wind farm may include: determining a historical reference power of the target wind turbine, based on a coefficient threshold and a wind power utilization coefficient, an air density, a wind swept area of an impeller, and a wind speed corresponding to the target wind turbine in a preset time period; obtaining a historical actual power of the target wind turbine monitored in the preset time period; comparing the historical actual power with the historical reference power, and determining the historical icing flag information of the target wind turbine based on a comparison result. In this embodiment, the comparison result may include: (1) the historical actual power is less than the historical reference power; or (2) the historical actual power is greater than or equal to the historical reference power. In a case that the historical actual power is less than the historical reference power, it indicates that power generated by the target wind turbine is reduced due to the icing. In such case, the historical icing flag is marked as an icing state. In some embodiments, the historical reference power may be determined as a product of the coefficient threshold, the wind power utilization coefficient, the air density, the wind swept area of the impeller and the wind speed.

In some embodiments, the coefficient threshold may be between 0 and 1/2.

In some embodiments, the obtaining the historical icing flag information of the target wind turbine may include: obtaining icing sensing data acquired by a sensor arranged on the target wind turbine; and obtaining the historical icing flag information of the target wind turbine based on the icing sensing data.

In S320, the historical meteorological prediction data feature may include original data in the historical global meteorological data, and/or the processed data obtained by processing the original data. Therefore, the original data and the processed data in the embodiment of the present application may be used as the historical meteorological prediction data feature, so that an issue that a poor pertinence due to using the original data alone and a large deviation due to using the processed data alone can be addressed. A data basis for a precision of a later prediction is provided, thereby ensuring a accurate prediction of icing information later.

In some embodiments, the historical meteorological prediction data feature includes one or more of the following parameters: microphysical parameters, cumulus convection parameters, planetary boundary layer parameters, land surface parameters, turbulence parameters, diffusion parameters, and radio wave radiation parameters. Where the historical meteorological prediction data feature may be all meteorological data that is finally output or intermediately output in a numerical mode. The historical meteorological prediction data feature may also include parameters other than the microphysical parameters, the cumulus convection parameters, the planetary boundary layer parameters, the land surface parameters, the turbulence parameters, the diffusion parameters, and the radio wave radiation parameters.

In S330, the generating the icing prediction model may include: determining the historical meteorological prediction data feature and the historical icing flag information as sample data; dividing the sample data into a training data set and a test data set; training the training data set by a supervised machine learning method, so as to obtain a basic meteorological preset data feature; and testing the basic meteorological preset data feature by using the test data set to obtain the icing prediction model which predicts icing information based on valid meteorological prediction data feature. Therefore, the prediction and the test can be combined perfectly through the training data set and the test data in the embodiment of the present application, so that the precision of the icing prediction can be further improved.

In some embodiments, the generation method of a model may further include: obtaining topographic characteristic data and/or climate characteristic data of each of the target wind turbines in the target wind farm; clustering the historical meteorological prediction data feature based on the topographic characteristic data and/or the climate characteristic data; and training, based on the historical icing flag information and the clustered historical meteorological prediction data feature, to obtain the icing prediction model which predicts the icing information based on the valid meteorological forecasting data feature,. Therefore, the training can be more targeted by the method of clustering data in the embodiment of the present application, which can not only improve the training accuracy and in turn improve the accuracy of the icing prediction, but also can reduce the data computation, the computational overhead and save the training time.

In some embodiments, a clustering should be performed first, and then models for different clusters are established according to the method of the above embodiment, in a case that the number of wind turbines in the target wind farm is huge and the distribution thereof is relatively scattered or the difference between topographies of different wind turbines is large.

In some embodiments, in a case that there is only one wind turbine in the target wind farm, the model is established in a time dimension, that is, based on the training set data comprising data in a part of the time period and the test set data comprising data in another part of the time period .

Specifically, since the numerical weather forecast usually covers an area of hundreds of kilometers, all the wind turbines in a simulated area may be clustered, in a case that there is multiple target wind farms in the simulated area of the numerical forecast, and there is one or more wind turbines in each of the multiple target wind farms. The principles for clustering may include topographic conditions and local meteorological conditions., The topographic conditions includes an altitude, a roughness, a ruggedness index, and the local meteorological conditions includes convection intensity, an atmospheric stability, a turbulence intensity, a wind speed, a wind direction, etc., A model is then established in the manner of the above embodiment based on different clusters. The icing prediction model established in this embodiment can be provided to multiple target wind farms within the scope of the numerical weather prediction.

In some embodiments, the method of generating a model may further include: obtaining an operating parameter of a target wind turbine; and training, based on the operating parameter, the historical meteorological prediction data feature and the historical icing flag information, to obtain the icing prediction model which predicts the icing information based on the valid meteorological prediction data feature,. According to the embodiment of the present application,, a targeted training can be performed, based on the operating parameters of the target wind turbine, the historical meteorological prediction data feature and the historical icing flag information so as to obtain a prediction model that is highly matched with the target wind turbine, thereby greatly improving the precision of the icing prediction.

In some embodiments, the operating parameters may include: a blade speed, a pitch angle and a generated power.

Figure 4 is a schematic diagram of a method for predicted icing on a wind turbine generator system according to an embodiment of the present application.

As shown in Figure 4, a wind turbine icing prediction method for predicting icing on the wind turbine may include the following steps S410 to S430. In S410, a valid meteorological prediction data feature of a target wind turbine is extracted based on geographic information of the target wind turbine. In S420, the valid meteorological prediction data feature is inputted into an icing prediction model for predicting icing information; S430, outputting an icing prediction result by the icing prediction model in response to the input.

In some embodiments, the extracting the valid meteorological prediction data feature of the target wind turbine based on the geographic information of the target wind turbine (S410) may include: obtaining global meteorological data of a target wind farm where the target wind turbine is located; obtaining geographic information of each of wind turbines in the target wind farm; and extracting, from the global meteorological data based on the geographic information of each of the wind turbines, the valid meteorological prediction data feature associated with an icing of each of wind turbines.

In some embodiments, the valid meteorological prediction data feature may include an original meteorological data feature, and/or a processed feature obtained by processing the original meteorological data feature.

In some embodiments, the method of extracting the valid meteorological prediction data feature of the target wind turbine includes one or more of the following methods: an inverse distance weighting interpolation method, a modified Shepard's method, a bilinear interpolation method, a natural neighbor interpolation method, and a moving average method.

In some embodiments, the obtaining global meteorological data of a target wind farm where the target wind turbine is located may include: obtaining a topographic feature and a climatic feature of the target wind farm; determining the global meteorological data including a parameterization scheme, based on the topographical feature and the climatic feature, to perform a numerical weather prediction for the target wind farm.

In some embodiments, the method for predicting icing on the wind turbine generator system may further include: obtaining a historical meteorological prediction data feature and a historical icing flag; and establishing the icing prediction model for outputting predicted icing information based on input information comprising the historical meteorological prediction data feature and the historical icing flag.

In some embodiments, the establishing the icing prediction model for outputting predicted icing information based on input information comprising the historical meteorological prediction data feature and the historical icing flag may include: dividing the input information into a training data set and a test data set; training, by a supervised machine learning method, the training data set; performing a test on the trained training data set by using the test data set to obtain a test result; and establishing the icing prediction model based on the test result.

In some embodiments, the dividing the input information into a training data set and a test data set may include the followings. In a case that there are multiple target wind turbines, the multiple target wind turbines are clustered, based on the topographic conditions and/or the meteorological conditions of the multiple target wind turbine, to generate wind turbines of a first type and wind turbines of a second type., Input information of the wind turbines of the first type is determined as the training data set; and input information of the wind turbines of the second type is determined as the test data set.

In some embodiments, the dividing the input information into a training data set and a test data set may include the followings. In a case that there is only one target wind turbine, input information of the target wind turbine in a first period is clustered into a training data set, and input information of the target wind turbine in a second period is clustered into a test data set.

According to the above embodiment, the data set is more targeted and more accurate since a clustering is performed, which may facilitate a subsequent accurate icing prediction for any number of wind turbines in any wind farm.

In some embodiments, the obtaining the historical meteorological prediction data feature of the target wind turbine may include: obtaining topographic feature and climatic feature of a target wind farm where the target wind turbine is located; obtaining historical global meteorological data of the target wind farm; and extracting the historical meteorological prediction data feature from the historical global meteorological data, based on the topographic feature and the climatic feature.

In some embodiments, the obtaining the historical icing flag of the target wind turbine includes: determining whether the temperature and humidity meet the icing condition; determining whether an operating parameter of the target wind turbine is abnormal in a case that a temperature and a humidity meet an icing condition; and obtaining the historical icing flag of the target wind turbine in a case that the operating parameter of the target wind turbine is abnormal. The above icing prediction model of the target wind turbine is applied to predict the icing information of the target wind turbine in the embodiment of the present application. An application scenario is to display the predicted the icing information (such as the icing flag) in a monitoring system of a wind farm owner. The predicted icing information may be an indication of whether the target wind turbine is in an icing state after a preset time (for example, after 6 hours). For example, a flag for a fully icing is 1, a flag for no icing is 0, and a flag for relatively thin icing is 0.1 and a flag for a very thick icing is 0.9. The predicted icing information may also be a curve showing an icing possibility of the target wind turbine.

In some embodiments, the predicted icing information may be outputted to multiple systems and incubate corresponding services, such as application scenarios that a core variable for an icing prediction service of a regional multi-wind farm scheduling system; or, an input variable for a dynamic operation and maintenance decision system.

It should be noted that an executive subject of the above method may be a processor or a controller and the like. In a case of no conflict, those skilled in the art can flexibly adjust the sequence of the above processing steps according to actual needs, or flexibly combining the above steps. For the sake of brevity, various implementations are omitted herein. In additional, the contents of the embodiments may be referred to each other.

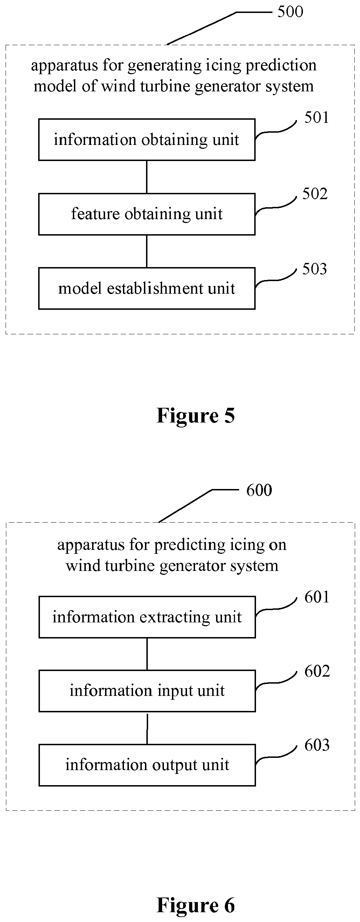

Figure 5 is a structure schematic diagram of a non-claimed apparatus for generating an icing prediction model of a wind turbine generator system according to an embodiment of the present application.

As shown in Figure 5, an apparatus 500 may include: an information obtaining unit 501, a feature obtaining unit 502 and a model establishment unit 503. The information obtaining unit 501 may be configured to obtain geographic information and historical icing flag information of a target wind turbine in a target wind farm. The feature obtaining unit 502 may be configured to obtain a historical meteorological prediction data feature of the target wind turbine corresponding to the geographic information; the model establishment unit 503 may be configured to establish the icing prediction model for outputting predicted icing information based on input information comprising the historical meteorological prediction data feature and the historical icing flag.

In some embodiments, the information obtaining unit 501 may be configured to: obtain topographic characteristic data and climate characteristic data of the target wind turbine based on the geographic information; obtain historical global meteorological data of the target wind farm in a preset time period; and extract the historical meteorological prediction data feature from the historical global meteorological data, based on the topographic characteristic data and the climate characteristic data.

In some embodiments, the historical meteorological prediction data feature may include original data in the historical global meteorological data and/or processed data obtained by processing the original data.

In some embodiments, the historical meteorological prediction data feature includes one or more of the following parameters: microphysical parameters, cumulus convection parameters, planetary boundary layer parameters, land surface parameters, turbulence parameters, diffusion parameters, and radio wave radiation parameters.

In some embodiments, the information obtaining unit 501 may be further configured to: determine a historical reference power of the target wind turbine, based on a coefficient threshold and a wind power utilization coefficient, an air density, a wind swept area of an impeller, and a wind speed corresponding to the target wind turbine in a preset time period; obtain a historical actual power of the target wind turbine monitored in the preset time period; compare the historical actual power with the historical reference power, and determine the historical icing flag information of the target wind turbine based on the comparison result.

In some embodiments, the information obtaining unit 501 may be further configured to: determine the historical reference power as a product of the coefficient threshold, the wind power utilization factor, the air density, the wind swept area of an impeller and the wind speed.

In some embodiments, the coefficient threshold may be between 0 and 1/2.

In some embodiments, the information obtaining unit 501 may be further configured to: obtain icing sensing data collected by a sensor arranged on the target wind turbine; and obtain the historical icing flag information of the target wind turbine based on the icing sensing data.

In some embodiments, the model establishment unit 503 may be further configured to: determine the historical meteorological prediction data feature and the historical icing flag information as sample data; divide the sample data into a training data set and a test data set; train the training data set, based on the supervised machine learning method, to obtain the basic meteorological preset data feature; and test the basic meteorological preset data feature using the test data set to obtain the icing prediction model, which predicts the icing information based on the valid meteorological prediction data feature.

Figure 6 is a structure schematic diagram of a non-claimed apparatus for predicting icing on a wind turbine generator system according to an embodiment of the present application.

As shown in Figure 6, an apparatus 600 may include an information extracting unit 601, an information input unit 602 and an information output unit 603. The information extracting unit 601 may be configured to extract a valid meteorological prediction data feature of a target wind turbine based on geographic information of the target wind turbine. The information input unit 602 may be configured to input the valid meteorological prediction data feature into an icing prediction model for predicting icing information. The information output unit 603 may be configured to output an icing prediction result by the icing prediction model in response to the input.

In the present embodiment, an icing prediction flag for prediction is generated by performing a computation based on real-time meteorological prediction data feature using the icing prediction model as shown in Figure 6. The computing environment for the icing prediction model may be a central monitoring system of a wind farm owner, or a computer in a remote monitoring center, or other machines having a computing capability.

In some embodiments, the icing prediction model may output a curve showing an icing possibility after 6 hours in the monitoring system of the wind farm owner.

In some embodiments, the apparatus 600 may further include a feature clustering unit. The feature clustering unit may be configured to: obtain topographic characteristic data and/or climate characteristic data of each of target wind turbines in the target wind farm; perform a clustering on the historical meteorological prediction data feature based on the topographic characteristic data and/or the climate characteristic data; and perform a training based on the historical icing flag information and the clustered historical meteorological prediction data feature, so as to obtain the icing prediction model which predicts the icing information based on the valid meteorological forecasting data feature,.

In some embodiments, the apparatus 600 may further include an optimization training unit. The optimization training unit may be configured to: obtain an operating parameter of the target wind turbine; and perform a training based on the operating parameter, the historical meteorological prediction data feature and the historical icing flag information, so as to obtain the icing prediction model which predicts the icing information based on the valid meteorological forecasting data feature,.

In some embodiments, the operating parameters may include a blade speed, a pitch angle and a generated power.

Units in the above embodiments may be integrated in one processing unit, or the units each may be a physically separate unit, or two or more of the units may be integrated into one unit. The above integrated unit may be realized in a form of hardware or in a form of software process unit.

It should be noted that, the apparatus in the above embodiments can serve as the executive subject for performing corresponding methods of the embodiments, which can implement the corresponding processes in each of the corresponding methods and achieve the same technical effect. For the sake of brevity, these contents are omitted herein.

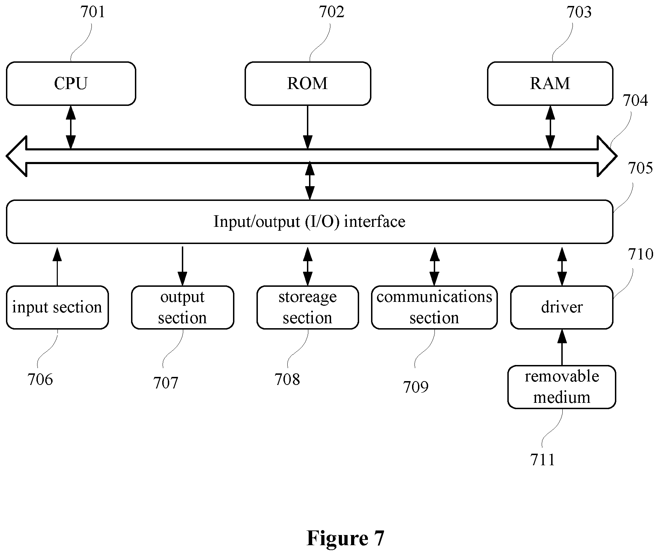

Figure 7 is an architecture schematic diagram of an apparatus for predicting icing on a wind turbine generator system according to an embodiment of the present application.

As shown in Figure 7, e a central processing unit (CPU) 701 is included in the architecture, which may execute various operations in embodiments of Figure 1, Figure 2, Figure3, and Figure 4, based on a program stored in a Read Only Memory (ROM) 702 or a program in a Random Access Memory (RAM) 703 which is read from a storage section 708. In the RAM 703, various programs and data required by system architecture operations are also stored. The CPU 701, the ROM 702 and the RAM 703 are connected to each other through a bus 704. Input/output (I/O) interface 705 is also connected to the bus 704.

The following elements are connected to I/O interface 705: an input section 706 including a keyboard and a mouse; an output section 707 including elements such as a Cathode Ray Tube (CRT), a Liquid Crystal Display (LCD) and a speaker; a storage section 708 including a hard disk; and a communication section 709 including a network interface card such as a LAN card and a modem. The communication section performs a communication process via a network such as the Internet. The driver 710 may also be connected to the I/O interface 705 if needed. A removable medium 711, such as a magnetic disk, an optical disk, a magneto-optical disk, and a semiconductor memory, may be mounted on the drive 710 as needed, such that a computer program may be read out therefrom and may be stored in the storage section 708 as needed.

According to claim 7, a computer readable storage medium is provided which stores a computer program. In such an embodiment, the computer program may be downloaded and installed from the network via the communication section 709, and/or installed from the removable media 711.

The apparatus embodiments described above are only illustrative, in which various units that are described as separate components may be or not be separated physically. Elements described as units may be or not be physical units, i.e., the elements may be located at one place or distributed in multiple network units.

According to claim 6, an apparatus for predicting icing on a wind turbine is provided.

It should be noted that the above embodiments are merely provided for a purpose for illustrating the technical solutions of the present application and is not intended to limit the invention which is defined by the appended claims.

## Claims

1. A method for predicting icing on a wind turbine, comprising:

extracting a valid meteorological prediction data feature of a target wind turbine based on geographic information of the target wind turbine;
inputting the valid meteorological prediction data feature into an icing prediction model for predicting icing information;
outputting an icing prediction result by the icing prediction model in response to the input;
wherein the method comprises generating the icing prediction model for predicting icing information by:

obtaining a historical meteorological prediction data feature of the target wind turbine;
obtaining historical icing flag information of the target wind turbine;
performing model training based on the historical meteorological prediction data feature and the historical icing flag information;
obtaining the icing prediction model based on the training;
wherein the obtaining a historical meteorological prediction data feature comprises:

obtaining topographic characteristic data and climate characteristic data of the target wind turbine, based on geographic information of the target wind turbine;
obtaining historical global meteorological data of a target wind farm where the target wind turbine is located; and
extracting the historical meteorological prediction data feature from the historical global meteorological data based on the topographic characteristic data and climate characteristic data.

2. The method according to claim 1, wherein the extracting a valid meteorological prediction data feature of a target wind turbine based on geographic information of the target wind turbine comprises:

obtaining global meteorological data of a target wind farm where the target wind turbine is located;
obtaining geographic information of each of wind turbines in the target wind farm; and
extracting, from the global meteorological data based on the geographic information of each of the wind turbines, the valid meteorological prediction data feature associated with an icing of each of wind turbines.

3. The method according to claim 1, wherein the valid meteorological prediction data feature comprises:
an original feature of meteorological data and/or a processed feature obtained by processing the original feature of the meteorological data.

4. The method according to claim 1, wherein the extracting a valid meteorological prediction data feature of a target wind turbine based on geographic information of the target wind turbine is executed by one or more of the following methods:
an inverse distance weighting interpolation method, a modified Shepard's method, a bilinear interpolation method, a natural neighbor interpolation method, and a moving average method.

5. The method according to claim 2, wherein the obtaining global meteorological data of a target wind farm where the target wind turbine is located comprises:

obtaining a topographic feature and a climatic feature of the target wind farm; and
determining the global meteorological data comprising a parameterization scheme based on the topographic feature and the climatic feature, to perform a numerical weather prediction for the target wind farm.

6. An apparatus for predicting icing on a wind turbine, comprising:

at least one processor, at least one memory storing a computer program,
wherein the computer program, when being executed by the processor, cause the apparatus to perform the method according to any one of claims 1 to 5.

7. A computer readable storage medium which stores a computer program, wherein the computer program, when being executed by the processor of the apparatus of claim 6, cause the apparatus of claim 6 to perform the method according to any one of claims 1 to 5.

**Patentansprüche**

1. Verfahren zur Vorhersage einer Vereisung einer Windkraftanlage, umfassend:

Extrahieren eines gültigen meteorologischen Vorhersagedatenmerkmals von einer Ziel-Windkraftanlage basierend auf einer geografischen Information von der Ziel-Windkraftanlage;
Eingeben des gültigen meteorologischen Vorhersagedatenmerkmals in ein Vereisungsvorhersagemodell zur Vorhersage einer Vereisungsinformation;
Ausgeben eines Vereisungsvorhersageergebnisses durch das Vereisungsvorhersagemodell als Reaktion auf die Eingabe;
wobei das Verfahren ein Erzeugen des Vereisungsvorhersagemodells zur Vorhersage einer Vereisungsinformation umfasst durch:

Erhalten eines historischen meteorologischen Vorhersagedatenmerkmals von der Ziel-Windkraftanlage;
Erhalten einer historischen Vereisungfahnen-Information von der Ziel-Windkraftanlage;
Durchführen eines Modelltrainings basierend auf dem historischen meteorologischen Vorhersagedatenmerkmal und der historischen Vereisungfahnen-Information;
Erhalten des Vereisungsvorhersagemodells basierend auf dem Training;
wobei das Erhalten eines historischen meteorologischen Vorhersagedatenmerkmals umfasst:

Erhalten von charakteristischen topographischen Daten und charakteristischen Klimadaten von der Ziel-Windkraftanlage, basierend auf einer geographischen Information von der Ziel-Windkraftanlage;

Erhalten historischer globaler meteorologischer Daten von einem Ziel-Windpark, in dem sich die Ziel-Windkraftanlage befindet; und

Extrahieren des historischen meteorologischen Vorhersagedatenmerkmals aus den historischen globalen meteorologischen Daten basierend auf den charakteristischen topographischen Daten und den charakteristischen Klimadaten.

2. Verfahren nach Anspruch 1, wobei das Extrahieren eines gültigen meteorologischen Vorhersagedatenmerkmals von einer Ziel-Windkraftanlage basierend auf einer geografischen Information von der Ziel-Windkraftanlage umfasst:

Erhalten globaler meteorologischer Daten von einem Ziel-Windpark, in dem sich die Ziel-Windkraftanlage befindet;

Erhalten einer geografischen Information über jede Windkraftanlage in dem Ziel-Windpark; und

Extrahieren des gültigen meteorologischen Vorhersagedatenmerkmals, das mit einer Vereisung von jeder der Windkraftanlagen verknüpft ist, aus den globalen meteorologischen Daten, die auf der geographischen Information von jeder der Windkraftanlagen basieren.

3. Verfahren nach Anspruch 1, wobei das gültige meteorologische Vorhersagedatenmerkmal umfasst: ein ursprüngliches Merkmal von meteorologischen Daten und/oder ein verarbeitetes Merkmal, das durch eine Verarbeitung des ursprünglichen Merkmals von den meteorologischen Daten erhalten wurde.

4. Verfahren nach Anspruch 1, wobei das Extrahieren eines gültigen meteorologischen Vorhersagedatenmerkmals von einer Ziel-Windkraftanlage basierend auf einer geografischen Informationen von der Ziel-Windkraftanlage durch ein oder mehrere der folgenden Verfahren erfolgt: ein Interpolationsverfahren mit inverser Abstandsgewichtung, ein modifiziertes Shepard's-Verfahren, ein bilineares Interpolationsverfahren, ein natürliches Nachbarschaftsinterpolationsverfahren oder ein Verfahren des gleitenden Durchschnitts.

5. Verfahren nach Anspruch 2, wobei das Erhalten globaler meteorologischer Daten von einem Ziel-Windparks, in dem sich die Ziel-Windkraftanlage befindet, umfasst:

Erhalten eines topografischen Merkmals und eines klimatischen Merkmals von dem Ziel-Windpark; und

Bestimmen der globalen meteorologischen Daten umfassend ein Parametrisierungsschema basierend auf dem topografischen Merkmal und dem klimatischen Merkmal, um eine numerische Wettervorhersage für den Zielwindpark durchzuführen.

6. Einrichtung zur Vorhersage einer Vereisung einer Windkraftanlage, umfassend:

wenigstens einen Prozessor, wenigstens einen Speicher, der ein Computerprogramm speichert,

wobei das Computerprogramm, wenn es von dem Prozessor ausgeführt wird, die Einrichtung veranlasst, das Verfahren nach einem der Ansprüche 1 bis 5 durchzuführen.

7. Computerlesbares Speichermedium, das ein Computerprogramm speichert, wobei das Computerprogramm, wenn es von dem Prozessor der Einrichtung nach Anspruch 6 ausgeführt wird, die Einrichtung nach Anspruch 6 veranlasst, das Verfahren nach einem der Ansprüche 1 bis 5 durchzuführen.

**Revendications**

1. Procédé de prédiction de formation de glace sur une éolienne, comprenant :

l'extraction d'un attribut de données de prévisions météorologiques valide d'une éolienne cible sur la base d'informations géographiques de l'éolienne cible ;

l'entrée de l'attribut de données de prévisions météorologiques valide dans un modèle de prédiction de formation de glace pour prédire des informations de formation de glace ;

la sortie d'un résultat de prédiction de formation de glace par le modèle de prédiction de formation de glace en réponse à l'entrée ;

dans lequel le procédé comprend la génération du modèle de prédiction de formation de glace pour prédire des informations de formation de glace en :

obtenant un attribut de données de prévisions météorologiques historiques de l'éolienne cible ;

obtenant des informations d'indication de formation de glace historiques de l'éolienne cible ;

effectuant une formation de modèle sur la base de l'attribut de données de prévisions météorologiques historiques et des informations d'indication de formation de glace historiques ;

obtenant le modèle de prédiction de formation de glace sur la base de la formation ;

dans lequel l'obtention d'un attribut de données de prévisions météorologiques historiques comprend :

l'obtention de données caractéristiques topographiques et de données caractéristiques de climat de l'éolienne cible, sur la base d'informations géographiques de l'éolienne cible ;

l'obtention de données météorologiques générales historiques d'un parc éolien cible où se situe l'éolienne cible ; et

l'extraction de l'attribut de données de prévisions météorologiques historiques des données météorologiques générales historiques sur la base des données caractéristiques topographiques et des données caractéristiques de climat.

2. Procédé selon la revendication 1, dans lequel l'extraction d'un attribut de données de prévisions météorologiques valide d'une éolienne cible sur la base d'informations géographiques de l'éolienne cible comprend :

l'obtention de données météorologiques générales d'un parc éolien cible où se situe l'éolienne cible ;

l'obtention d'informations géographiques de chacune des éoliennes du parc éolien cible ; et

l'extraction, depuis les données météorologiques générales basées sur les informations géographiques de chacune des éoliennes, de l'attribut de données de prévisions météorologiques valide associé à une formation de glace de chacune des éoliennes.

3. Procédé selon la revendication 1, dans lequel l'attribut de données de prévisions météorologiques valide comprend :
un attribut d'origine de données météorologiques et/ou un attribut traité obtenu en traitant l'attribut d'origine des données météorologiques.

4. Procédé selon la revendication 1, dans lequel l'extraction d'un attribut de données de prévisions météorologiques valide d'une éolienne cible sur la base d'informations géographiques de l'éolienne cible est exécutée par un ou plusieurs des procédés suivants :
un procédé d'interpolation par pondération inverse à la distance, un procédé de Shepard modifié, un procédé d'interpolation bilinéaire, un procédé d'interpolation par voisins naturels et un procédé par moyenne mobile.

5. Procédé selon la revendication 2, dans lequel l'obtention de données météorologiques générales d'un parc éolien cible où se situe l'éolienne cible comprend :

l'obtention d'un attribut topographique et d'un attribut climatique du parc éolien cible ; et
la détermination des données météorologiques générales comprenant un schéma de paramétrage basé sur l'attribut topographique et l'attribut climatique, pour effectuer une prédiction de temps numérique pour le parc éolien cible.

6. Appareil de prédiction de formation de glace sur une éolienne, comprenant :

au moins un processeur, au moins une mémoire stockant un programme informatique,
dans lequel le programme informatique, lorsqu'il est exécuté par le processeur, amène l'appareil à effectuer le procédé selon l'une quelconque des revendications 1 à 5.

7. Support de stockage lisible par ordinateur qui stocke un programme informatique, dans lequel le programme informatique, lorsqu'il est exécuté par le processeur de l'appareil selon la revendication 6, amène l'appareil selon la revendication 6 à effectuer le procédé selon l'une quelconque des revendications 1 à 5.

S110

obtain the historical meteorological
prediction data feature

S130

model
training

S140

establish icing prediction
model

obtain the historical icing flag
information

S120

**Figure 1**

S201

obtain historical global
meteorological data

S203

extract
data

S204

obtain historical
meteorological
prediction data feature

original data

processed data

obtain geographical information of
the target wind turbine in the target
wind farm

S202

**Figure 2**

obtain geographic information and historical icing flag information of
the target wind turbine in the target wind farm ⟶ S310

obtain historical meteorological prediction data feature of the target
wind turbine corresponding to the geographic information ⟶ S320

establish the icing prediction model for outputting predicted icing
information based on input information comprising the historical
meteorological prediction data feature and the historical icing flag ⟶ S330

**Figure 3**

extract valid meteorological prediction data feature of a target wind
turbine based on geographic information of the target wind turbine ⟶ S410

input the valid meteorological prediction data feature into an icing
prediction model for predicting icing information ⟶ S420

output an icing prediction result by the icing prediction model in
response to the input ⟶ S430

**Figure 4**

500

apparatus for generating icing prediction
model of wind turbine generator system

information obtaining unit  501

feature obtaining unit  502

model establishment unit  503

**Figure 5**

600

apparatus for predicting icing on
wind turbine generator system

information extracting unit  601

information input unit  602

information output unit  603

**Figure 6**

701                          702                          703

| CPU | | ROM | | RAM |

704

705

| Input/output (I/O) interface |

710

| input section | | output section | | storeage section | | communications section | | driver |

706        707        708        709

| removable medium |

711

**Figure 7**

**EP 3 524 813 B1**

**REFERENCES CITED IN THE DESCRIPTION**

**Patent documents cited in the description**

- US 2012226485 A1
- US 8606418 B1
- EP 2826993 A1